Europäisches Patentamt

European Patent Office

Office européen des brevets

(19)

(11) **EP 1 555 707 A1**

(12) **EUROPEAN PATENT APPLICATION**
published in accordance with Art. 158(3) EPC

(43) Date of publication:
**20.07.2005 Bulletin 2005/29**

(51) Int Cl.⁷: **H01M 8/02**, H01M 8/04,
**H01B 1/06**

(21) Application number: **03758738.3**

(22) Date of filing: **20.10.2003**

(86) International application number:
**PCT/JP2003/013350**

(87) International publication number:
**WO 2004/038839 (06.05.2004 Gazette 2004/19)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **22.10.2002 JP 2002307043**
**27.11.2002 JP 2002343762**

(71) Applicants:
- **Takeuchi, Yasuaki**
  **Nagoya-shi, Aichi 464-0061 (JP)**
- **LG Chem Ltd.**
  **Seoul 150-721 (KR)**

(72) Inventors:
- **Takeuchi, Yasuaki**
  **Nagoya-shi, Aichi 464-0061 (JP)**
- **Suzuki, Satoru**
  **Ushiku-shi, Ibaraki 300-1207 (JP)**
- **Kawamura, Katsuyuki**
  **Ohta-ku, Tokyo 145-0066 (JP)**
- **Sano, Mitsuru**
  **Nagoya-shi, Aichi 465-0018 (JP)**

(74) Representative: **Hinkelmann, Klaus, Dr. et al**
**Stolmár Scheele Hinkelmann**
**Blumenstrasse 17**
**80331 München (DE)**

(54) **SHEET SILICATE MINERAL AND FUEL CELL INCLUDING INTERCALATION COMPLEX THEREOF AS SOLID ELECTROLYTE MEMBRANE**

(57)    The present invention aims to provide a solid proton exchange membrane and a membrane-electrode assembly (MEA) for use in fabricating an inexpensive and efficient proton exchange fuel cell (PEFC) which enables direct use of an organic fuel without a reformer and use of hydrogen gas. In particular, the invention provides an electrochemical cell including a solid electrolyte membrane made of one or plural kinds of layered silicate minerals or the intercalation compounds. The layered silicate minerals can be easily fabricated into a solid electrolyte membrane which shows a "molecular sieve effect" on the target fuel if the density and impregnated liquid contents are properly controlled. A composite membrane in which a catalyst is directly supported is also fabricated easily. Since the layered silicate mineral is an inorganic material, the fuel cell can be operated at high temperature. Thus, the catalyst can be selected from a wide range of candidate materials. The layered silicate minerals are abundant in nature and inexpensive. The use of the layered silicate mineral allows to fabricate an inexpensive direct methanol fuel cell (DMFC) and a realistic direct ethanol fuel cell (DEFC). Furthermore, an energy-efficient PEFC using hydrogen gas can also be produced therefrom.

Fig. 1

## Description

Technical Field

The present invention relates to a solid cation-exchange membrane and a membrane-electrolyte assembly for use in the production of a solid electrolyte fuel cell in which an organic fuel can be directly supplied without the use of a reformer.

Background Art

Patent literature 1: Japanese Patent Publication No. Hei 10-507572

Patent literature 2: Japanese Patent Publication No. 2000-516014

Non-patent literature 1: "Technology of Fuel Cell", edited by Special Committee of Examination of Next-Generation System for Electricity Generation in Fuel Cell (The Institute of Electrical Engineers of Japan), Ohm-sha, August 30, 2002, p.55-98 (in Japanese).

Non-patent literature 2: "New Development of Electrode Catalyst Chemistry", edited by Yoshio Takasu, Akiko Aramata and Yoshio Hori, Book Publisher of Hokkaido University, February 25, 2001, p.207-230, Chapter 9 "New Development of Electrode Catalyst Science" by Masayuki Morita (in Japanese).

Non-patent literature 3: "Journal of America Chemical Society", Vol. 105, No. 3, 1983, p.658-659, Katayama-Aramata, A., and Ohnishi, R.

Non-patent literature 4: International Journal for Numerical Methods in Engineering, 2002, 54, p. 1717-1749, "Molecular dynamics and multiscale homogenization analysis of seepage/diffusion problem in bentonite clay", Ichikawa, Y., Kawamura, K., Fujii, N., and Theramast, N.

Non-patent literature 5: Journal of the Clay Science Society of Japan, Vol. 41, No. 2, 2001, p.43-47, "Microstructural modeling of compacted sodium-bentonite and application of unified molecular dynamics/homogenization analysis for diffusion process" Suzuki, Satoru et al. (in Japanese).

Non-patent literature 6: Journal of Nuclear Science and Technology, 1992, 29, p873-882, "Effect of dry density on diffusion of some radionuclides in compacted sodium bentonite", Sato, H., Ashida, T., Kohara, Y., Yui, M., and Sasaki, N.

Non-patent literature 7: Radioactive Waste Management and Environmental Remediation, American Society of Mechanical Engineers, 1999, "Activation energies of diffusion of tritium and electrical conduction in water-saturated compacted sodium montmorillonite", Nakazawa, T., Takano, M., Nobuhara, A., Torikai, Y., Sato, S., and Ohashi, H.

A polymer electrolyte fuel cell or proton exchange fuel cell (PEFC) is expected as a power source for fuel cell automobiles and household systems. The PEFC involves a solid polymer membrane for an electrolyte and has the following characteristics.

(1) The electrolyte is not dissipative and is easy to handle.
(2) It can start up at room temperature and works at temperature less than 100 °C.
(3) It can be small because it has a simple structure and can develop a high output density.

The working principle and manufacturing process of an organic fuel cell with the solid electrolyte membrane is disclosed in Japanese Patent Publication No. Hei 10-507572 (July, 1998). A further improvement of a proton exchange membrane (PEM) filled with inorganic materials is disclosed in Japanese Patent Publication No. 2000-516014 (November, 2000).

The PEFC will be put to a practical use in the near future. Its characteristics have been widely studied and are reported in many literatures (see non-patent literatures 1 and 2 as general reports).

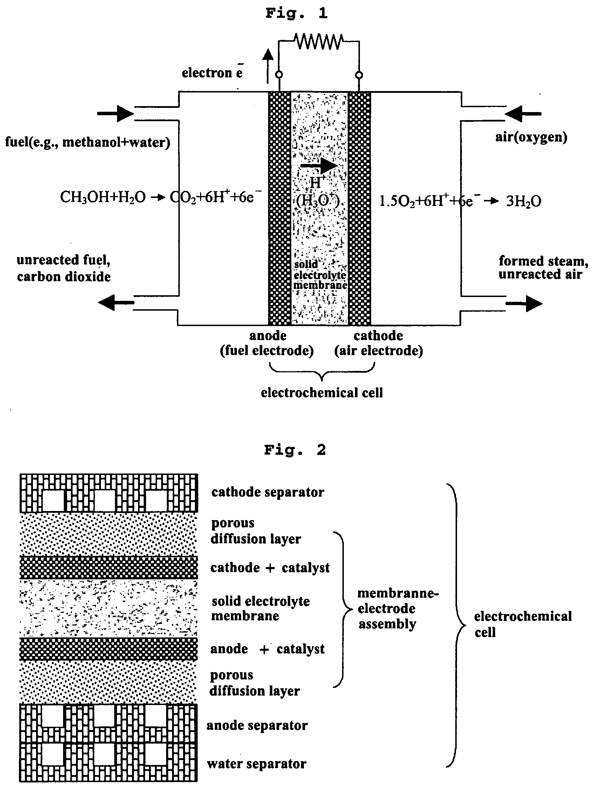

FIG. 1 shows the working principle of PEFC using a solid electrolyte membrane. Water-premixed methanol is illustrated as an example of its fuel. Electrodes with a dispersed catalyst are placed on both sides of the membrane to form a membrane-electrode assembly (MEA). An anode separator for supplying the fuel and a water separator for cooling are attached at the anode side, and a cathode separator is attached for supplying air (oxygen) at the cathode side to form a single electrochemical cell. The structure of this electrochemical cell is shown in FIG. 2 (see non-patent literature 2). Multiply-connected electrochemical cells form a cell stack, and then a PEFC system is built up.

The PEFC of the organic fuels is classified into a reformed gas supply model and a direct fuel supply model: The reformed gas supply model uses hydrogen through a reformer extracted from the fuel, such as natural gas, liquefied petroleum gas or methanol. The direct fuel supply model uses an organic fuel which is directly supplied to the fuel electrode. The direct fuel supply model using methanol is called the direct methanol fuel cell (DMFC) and seems to be put to practical use soon as a power source for automobiles and portable electronic devices.

A perfluorosulfonic acid polymer, an organic polymer material, is commonly used for a solid electrolyte membrane of PEFC. The polymer membrane is commercially supplied: Nafion (a trademark of DuPont Co.), Flemion (a trademark of Asahi Glass Co.) and Aciplex (a trademark of Asahi Kasei Co.).

A carbon paper with a thickness of several tens meters is usually used for the electrode on which a dispersed catalyst of noble metal (mainly, platinum (Pt) and its alloy) is supported. Composite membranes in which a catalyst is directly supported are also used currently and their catalytic activity is reported to be maintained for a long time (see non-patent literature 3).

Oxidation reaction at the anode of DMFC is known as a migration process of six electrons, which is ideally represented by the following formula:

$$CH_3OH + H_2O \rightarrow CO_2 + 6H^+ + 6e^-$$

This may involve complex six elementary steps of reaction. In this reaction process, HCHO, HCOOH, CO and others are detected in addition to $CO_2$, but details of the reaction mechanism are not yet clear (see non-patent literature 2). CO generated in this process is a catalyst poisoning species and results in a rapid reduction of the catalytic activity. DMFC is generally said to be excellent in energy efficiency since it has no heat loss caused by a reformer, however, currently it shows a low output density (that is, low cell voltage) due to a slow oxidation rate at the anode.

In order to increase the reaction rate, the working temperature may be increased. However, if increased, the polymer membrane will tend to deteriorate and a methanol crossover phenomenon becomes serious, so that the output power may not be increased. Thus, it is a major challenge of DMFC to develop a heat-resisting and anti-crossover membrane.

The cost for electricity generation of PEFC is mostly determined by the price and lifetime of the membrane and catalyst. For example, the polymer membrane costs about one hundred thousand Japanese Yen/m$^2$. Since for an automobile of 60 kW output, a membrane of about 10 m$^2$ is needed, so the membrane costs about one million Yen for one car. A membrane material of high performance and low price is strongly expected.

Disclosure of the Invention

Instead of the polymer membrane, the present invention utilizes an inorganic porous electrolyte membrane made of one or plural kinds of layered silicate minerals (generally known as clay) which involve a nanometer scale of pores (that is, nanopores), and utilizes an electrolyte membrane made of an intercalation compound, which shows an improved performance by intercalating inorganic or organic ions into the interlayer space of the layered silicate mineral. Hereinafter, both the original and intercalated electrolyte membranes will be referred to as "layered silicate membranes" and the PEMC with the layered silicate membrane as the "layered silicate PEFC". Suitable candidates of the layered silicate minerals which are used in the present invention include montmorillonite (a clay mineral of the smectite group), beidellite (similarly a clay mineral of the smectite group), illite (a clay mineral of the illite group), and sericite (a mica group mineral).

The layered silicate mineral is a proton conductive inorganic material under a suitable condition. The working temperature of the layered silicate PEFC can be increased, if a proper layered silicate mineral is chosen and the working conditions such as moisture contents are adequately controlled. Then the catalyst can be chosen from a wide range of candidate materials. If the density and impregnated liquid contents are properly controlled when producing the layered silicate membrane, the fuel crossover can be prevented. Because of a molecular sieve effect of the layered silicate membrane, two inconsistent properties of high proton conductivity and low fuel crossover can be satisfies simultaneously. Accordingly, fundamental difficulties involved in PEFC (that is, increasing the working temperature and preventing the fuel crossover) can be solved.

The layered silicate minerals are widely distributed in nature and inexpensive. The layered silicate membrane can be easily produced by a molded compression method under control of the density and impregnated liquid contents. Moreover, a composite membrane in which a catalyst is directly supported may be produced easily.

Japanese Patent Publication No. Hei 10-507572 shows a technique of impregnating montmorillonite into a polymer electrolyte membrane as a hydrophilic additive agent having proton conductivity. However, the role of the montmorillonite in said patent is an additive agent for conductivity. The publication contains no mention of the use of clay itself as an electrolyte membrane, although the use of the layered silicate mineral itself as an electrolyte membrane allows an above-described excellent performance.

The layered silicate mineral which is generally known as clay is an inorganic porous material with nanopores. The ion conductive characteristics of clays, particularly smectite clays, are now understood clearly based on the physical and chemical facts covering from the molecular properties to macroscopic behaviors (non-patent literatures 4 and 5). In the present invention, after these knowledges, the optimum material conditions to permeate only proton H$^+$ and to prevent fuel crossover were investigated and the molecular sieve property thereof was confirmed by an experiment. Since a proton is generally combined with one water molecule in an aqueous solution to form an oxonium ion ($H_3O^+$), the diffusion of oxonium ions was examined in this experiment.

In the experiment, a bentonite (including more than 99 wt% of montmorillonite) was provided to form thin circular specimens (20 mm in diameter and 1 mm in thickness) by a molded compression method. The test piece was subjected to a permeation/diffusion test so as to determine the effective diffusion coefficients ($D_e$) of methanol, ethanol and oxonium ions.

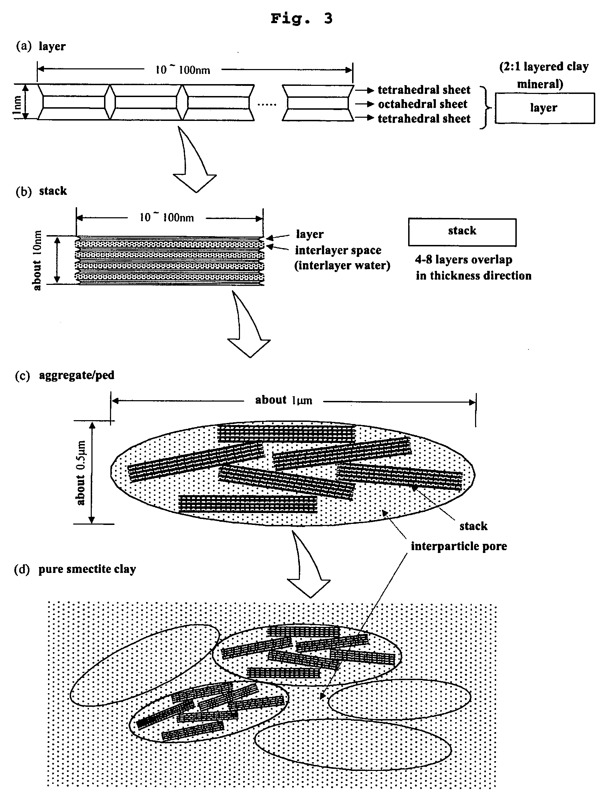

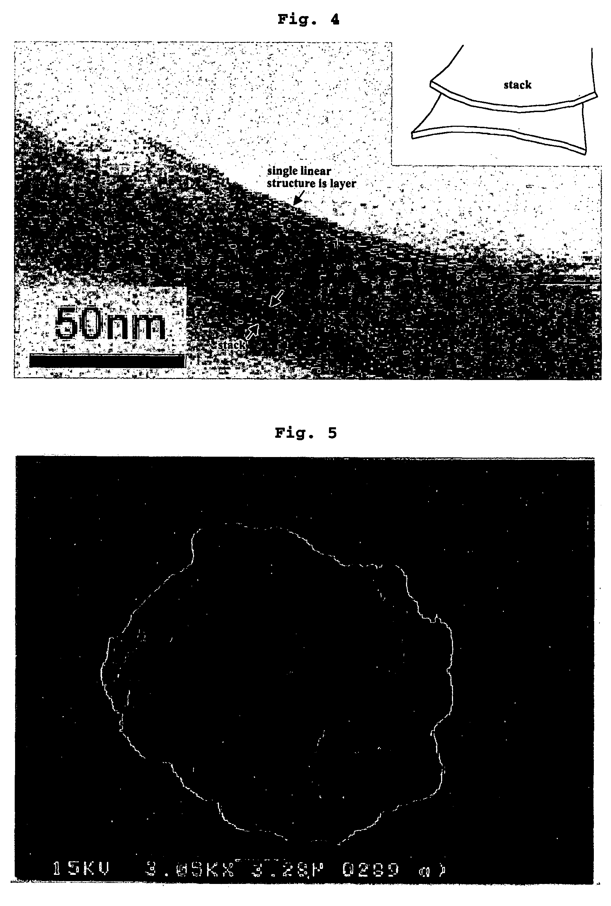

One montmorillonite mineral is a lamellar layer with the size of approximately 100x100x1 nm$^3$, and several montmorillonite layers gathered in a group together with interlayer water form a stack, and a number of these stacks are congregated into an aggregate/ped (see FIGS. 3 to 5). In a pure smectite clay, there are interlayer spaces between layers and interparticle spaces between stacks and between aggregates. The space size of compacted bentonite depends on its dry density. If the dry density is sufficiently large, the size of the interparticle space becomes almost equal to that of the interlayer space. Based on the results of X-ray diffraction analysis and considering the geometrical arrangement of clay particles, it is believed that the interlayer spaces of dry densities of 1.4 and 1.8 $Mg/m^3$ are about 0.9 nm and 0.6 nm, respectively, and the interparticle spaces are of similar sizes.

It is proved by molecular-based analyses that the water (an aqueous solution) in the interlayer space shows specific properties because of the surface charge of clay minerals (non-patent literature 4). In the compacted bentonite saturated with aqueous solution, the diffusion behavior of each chemical species is determined by the properties of the interlayer water and the size of the interlayer space. Since the size of a water molecule is about 0.3 nm which is smaller than that of methanol or ethanol, a molecular sieve effect is expected in the compacted bentonite to pass oxonium ions and to prevent methanol and ethanol.

The permeation/diffusion experiment was performed at a dry density 1.0 $Mg/m^3$ which is lower than the above dry densities (1.4 and 1.8 $Mg/m^3$). To a solution, sodium chloride of concentration 0.1 $mol/dm^3$ was added as a support electrolyte. As diffusing sources, methanol and ethanol of concentrations 7.5 wt% and 2.5 wt%, respectively were added. Also, as a diffusing source of oxonium ions, hydrochloric acid of concentration $10^{-3}$ N was added. Before the experiment, bentonite was saturated with 0.1 $mol/dm^3$ of NaCl aqueous solution.

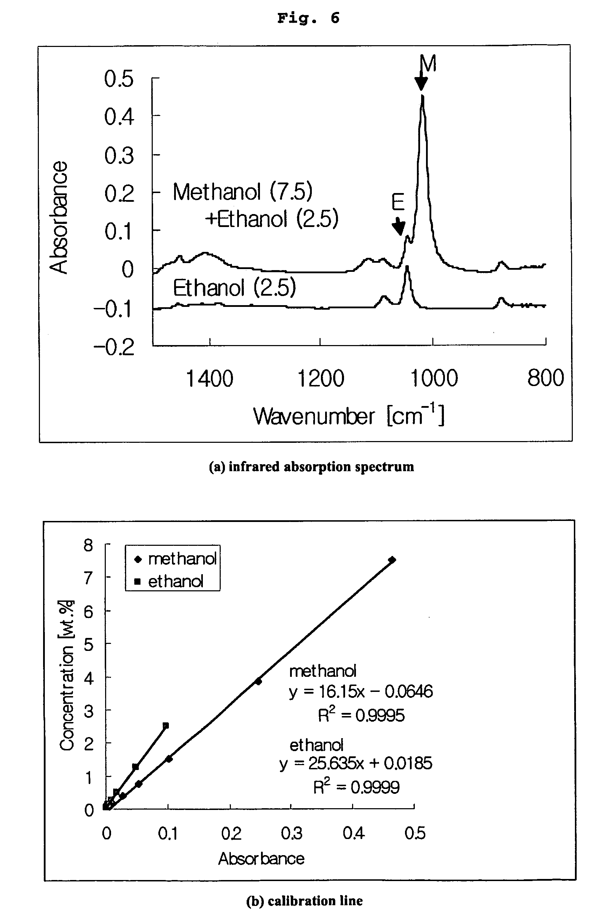

The concentrations of methanol and ethanol were determined by infrared absorption peak intensities of ATR-FTIR spectroscopy. Even though the mixture of methanol and ethanol was used, the peaks of the two organic materials could be clearly separated (see FIG. 6a). Under such test conditions, the calibration lines showed a sufficient linearity (see FIG. 6b). Meanwhile, in the case of oxonium ions, the proton activity was measured by a pH meter.

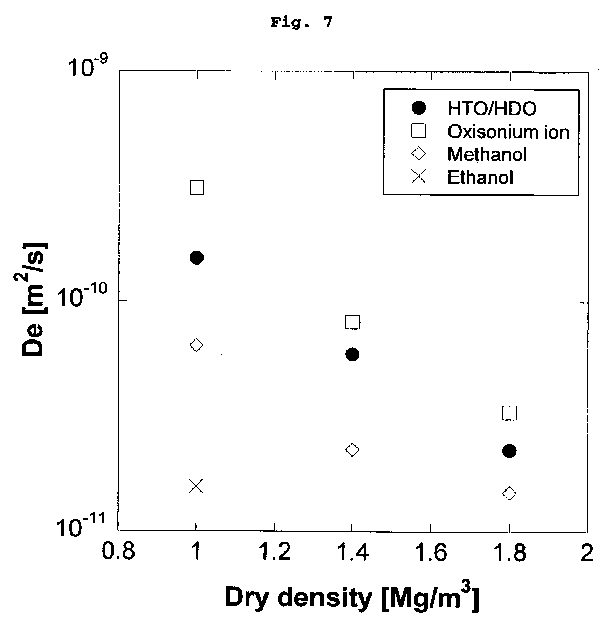

Results after the elapse of two weeks are shown as follows. Effective diffusion coefficients calculated from diffusion fluxes are given in FIG. 7. For comparison, the results of diffusion coefficients of deuterium water (HDO) and tritium water (HTO) are also shown (non-patent literatures 6 and 7). At the dry density 1.0 $Mg/m^3$, the diffusion coefficient is of the greatest value in the case of oxonium ions and decreases in the order of tritium water, methanol and ethanol. The diffusion coefficient of oxonium ions is about two times greater than that of methanol and one exponent greater than that of ethanol. Also, the diffusion coefficients of methanol and ethanol are smaller than that of the tritium water which is a neutral molecule. For high-compacted bentonite, no ethanol crossover was observed, so the molecular sieve effect can be detected.

Based on the experimental results of FIG. 7, it is understood that the layered silicate membrane provides a competent solid electrolyte of PEFC, if the density and impregnated liquid contents are properly controlled when producing.

Brief Description of the Drawings

FIG. 1 shows the working principle of PEFC.
FIG. 2 shows the structure of a single electrochemical cell.
FIG. 3 shows the microstructure of pure smectite clay (montmorillonite) saturated with water.
FIG. 4 is a microphotograph of transmission electron microscope (TEM) showing the cross-section of a stack.
FIG. 5 is a microphotograph of scanning electron microscope (SEM) showing an aggregate/ped.
FIG. 6 shows the quantitative determination of methanol and ethanol. (a) infrared absorption spectra and (b) calibration lines.
FIG. 7 shows a relationship between the effective diffusion coefficient and the dry density.

Best Mode for Carrying Out the Invention

If the electrolyte can be produced, it is possible to set up an electrochemical cell as shown in FIG. 1 on the basis of the existing technology and to build a fuel cell system by stacking the cells.

If the density and impregnated liquid contents are properly controlled when producing the layered silicate membrane or the intercalation compound membrane, the fuel crossover can be prevented. Because of a molecular sieve effect of the layered silicate membrane, two inconsistent properties of high proton conductivity and low fuel crossover can be satisfies simultaneously.

Based on the experimental results shown in FIG. 7, ethanol is a preferable fuel of the direct organic fuel cell using the layered silicate membrane. Furthermore, if the density and impregnated liquid contents are strictly controlled when producing the layered silicate membrane, it is possible to produce a solid electrolyte of the layered silicate membrane which shows a molecular sieve effect for organic fuels such as methanol, natural gas (methane), liquefied petroleum gas (propane) and gasoline.

In the case of the hydrogen PEFC it is known that a clay of layered silicate minerals saturated with water does not permeate gaseous hydrogen under a relatively low pressure condition. Thus, it is easy to fabricate a solid electrolyte membrane which does not permeate the hydrogen fuel.

Moreover, a composite membrane of the layered silicate mineral or the intercalation compound in which a catalyst is directly supported can also be easily fabricated. In this case, since the layered silicate mineral or the intercalation compound is an inorganic material as described above, a catalyst can be selected from a wide range of candidate materials. Furthermore, it is also easy to fabricate a membrane-electrode assembly (MEA) consisting of the solid electrolyte membrane of the layered silicate mineral or the intercalation compound, and electrodes in which electron conductive particles showing a high catalytic activity are dispersed.

Moreover, if diffusion layers of a porous material which also works as a support member of MEA, an anode separator, a cathode separator and a water separator are arranged on the faces of MEA, an inexpensive and energy-efficient electrochemical cell for PEFC can be fabricated easily.

Industrial Applicability

As can be seen from the foregoing, since the layered silicate mineral is an inorganic material, the layered silicate membrane is not deteriorated even when the working temperature of PEFC is set at high in order to increase the reaction rate, and it is possible to find the setting conditions for preventing the crossover of the fuel. This suggests a possibility to fabricate an efficient PEFC working at high temperature.

The layered silicate minerals are widely distributed in nature and inexpensive. Thus, the unit cost processing the solid electrolyte membrane is reduced, leading to a reduction in the cost of PEFC

As a result, according to the present invention, problems which are involved in the polymer membrane fuel cells can be improved. Then, a realistic direct ethanol fuel cell (DEFC) having an energy-efficiency can be fabricated.

As described above, the use of the layered silicate mineral or the intercalation compound thereof according to the embodiment of the present invention in the solid electrolyte membrane allows the fabrication of a PEFC which is inexpensive and energy-efficient. It will result in innovations in the following energy systems: (1) automobile engines; (2) industrial engines; and (3) household and industrial cogeneration systems.

**Claims**

1. A fuel cell comprising an anode, a solid electrolyte membrane and a cathode, wherein the solid electrolyte membrane is made of one or plural kinds of layered silicate minerals.

2. The fuel cell of Claim 1, wherein the solid electrolyte membrane is made of one or plural kinds of intercalation compounds which are produced by intercalating inorganic ions into the interlayer space of the layered silicate minerals.

3. The fuel cell of Claim 1, wherein the solid electrolyte membrane is made of one or plural kinds of intercalation compounds which are produced by intercalating organic ions into the interlayer space of the layered silicate minerals.

4. A method for fabricating a solid electrolyte membrane of one or plural kinds of layered silicate minerals and intercalation compounds of the layered silicate minerals for the fuel cells under a control of the density and impregnated liquid contents because a molecular sieve effect is brought into action.

5. A membrane-electrode assembly (MEA) consisting of a solid electrolyte membrane made of one or plural kinds of layered silicate minerals or intercalation compounds of the layered silicate minerals, and electrodes in which electron conductive particles showing a high catalytic activity are dispersed.

6. An electrochemical cell comprising: a membrane-electrode assembly (MEA) as set forth in Claim 5; and diffusion layers of porous material which also works as a support member of MEA, an anode separator, a cathode separator and a water separator, which are arranged on the faces of MEA.

7. A fuel cell which operates with an organic fuel, comprising a combination of the electrochemical cells as set forth in Claim 6.

8. The fuel cell of Claim 7, wherein the organic fuel is ethanol.

9. The fuel cell of Claim 7, wherein the organic fuel is methanol.

10. The fuel cell of Claim 7, wherein the organic fuel is natural gas (methane).

11. The fuel cell of Claim 7, wherein the organic cell is liquefied petroleum gas (propane).

12. The fuel cell of Claim 7, wherein the organic fuel is gasoline.

13. A fuel cell which operates with hydrogen, comprising a combination of the electrochemical cells as set forth in Claim 6.

## Fig. 1

electron $\bar{e}$

fuel(e.g., methanol+water)

air(oxygen)

$CH_3OH+H_2O \rightarrow CO_2+6H^++6e^-$

$H^+$
$(H_3O^+)$

$1.5O_2+6H^++6e^- \rightarrow 3H_2O$

unreacted fuel, carbon dioxide

formed steam, unreacted air

solid electrolyte membrane

anode (fuel electrode)

cathode (air electrode)

electrochemical cell

## Fig. 2

cathode separator

porous diffusion layer

cathode + catalyst

solid electrolyte membrane

anode + catalyst

porous diffusion layer

anode separator

water separator

membranne-electrode assembly

electrochemical cell

# Fig. 3

**(a) layer**

10 ~ 100nm

1nm

→ tetrahedral sheet
→ octahedral sheet
→ tetrahedral sheet

(2:1 layered clay mineral)

layer

**(b) stack**

10 ~ 100nm

about 10nm

layer
interlayer space
(interlayer water)

stack

4-8 layers overlap
in thickness direction

**(c) aggregate/ped**

about 1μm

about 0.5μm

stack

interparticle pore

**(d) pure smectite clay**

**Fig. 4**

**Fig. 5**

**Fig. 6**

(a) infrared absorption spectrum

(b) calibration line

Fig. 7

## INTERNATIONAL SEARCH REPORT

| International application No. |
| --- |
| PCT/JP03/13350 |

**A. CLASSIFICATION OF SUBJECT MATTER**
Int.Cl⁷ H01M8/02, H01M8/04, H01B1/06

According to International Patent Classification (IPC) or to both national classification and IPC

**B. FIELDS SEARCHED**

Minimum documentation searched (classification system followed by classification symbols)
Int.Cl⁷ H01M8/02, H01M8/04, H01B1/06

Documentation searched other than minimum documentation to the extent that such documents are included in the fields searched
Jitsuyo Shinan Koho          1922–1996    Toroku Jitsuyo Shinan Koho    1994–2004
Kokai Jitsuyo Shinan Koho    1971–2004    Jitsuyo Shinan Toroku Koho    1996–2004

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 11-312415 A (Kyocera Corp.), 09 November, 1999 (09.11.99), Par. Nos. [0042] to [0043] (Family: none) | 1-3 |
| A | WO 00/45447 A (CALIFORNIA INSTITUTE OF TECHNOLOGY), 03 August, 2000 (03.08.00), & JP 2002-536787 A | 1-13 |
| P,A | JP 2003-175340 A (Korea Institute of Science and Technology), 24 June, 2003 (24.06.03), (Family: none) | 1-13 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 21 January, 2004 (21.01.04) | 03 February, 2004 (03.02.04) |

| Name and mailing address of the ISA/ | Authorized officer |
| --- | --- |
| Japanese Patent Office | |
| Facsimile No. | Telephone No. |

Form PCT/ISA/210 (second sheet) (July 1998)

11

**EP 1 555 707 A1**

**INTERNATIONAL SEARCH REPORT**

| | International application No. |
|---|---|
| | PCT/JP03/13350 |

C (Continuation).   DOCUMENTS CONSIDERED TO BE RELEVANT

| Category* | Citation of document, with indication, where appropriate, of the relevant passages | Relevant to claim No. |
|---|---|---|
| P,A | JP 2003-217341 A  (Toyota Motor Corp.),<br>31 July, 2003 (31.07.03),<br>(Family: none) | 1-13 |
| P,A | JP 2003-272439 A  (Toyota Central Research And<br>Development Laboratories, Inc.),<br>26 September, 2003 (26.09.03),<br>(Family: none) | 1-13 |

Form PCT/ISA/210 (continuation of second sheet) (July 1998)